# EUROPÄISCHE PATENTSCHRIFT

(11) **EP 3 140 541 B1**
(45) Veröffentlichungstag und Bekanntmachung des Hinweises auf die Patenterteilung: **28.02.2018**
(21) Anmeldenummer: 15718216.3
(22) Anmeldetag: 23.04.2015
(51) Int. Cl.: F03D 1/00, F03D 7/02

(54) **AZIMUTVERSTELLUNG EINER WINDENERGIEANLAGE**
AZIMUTH POSITIONING ARRANGEMENT FOR A WIND TURBINE
ARRANGEMENT POUR POSITIONNEMENT D'AZIMUT D'UNE ÉOLIENNE

(30) Priorität: 06.05.2014 DE 102014208468
(43) Veröffentlichungstag der Anmeldung: 15.03.2017
(73) Patentinhaber: Wobben Properties GmbH, 26607 Aurich (DE)
(72) Erfinder: KNOOP, Frank, 26607 Aurich (DE)
(74) Vertreter: Eisenführ Speiser
(86) Internationale Anmeldenummer: PCT/EP2015/058756
(87) Internationale Veröffentlichungsnummer: WO 2015/169605

(56) Entgegenhaltungen:
- EP-A1- 1 659 286
- DE-A1-102011 017 801
- KR-B1- 101 346 178
- US-A1- 2013 149 146

## Beschreibung

Die vorliegende Erfindung betrifft eine Verstellvorrichtung zum Verstellen einer Azimutposition einer Gondel einer Windenergieanlage und sie betrifft ein Verstellmittel zur Verwendung in einer solchen Verstellvorrichtung. Weiterhin betrifft die Erfindung eine Windenergieanlage mit einer Verstellvorrichtung zum Verstellen einer Azimutposition der Gondel und sie betrifft ein Verfahren zum Verstellen einer Azimutposition einer Gondel.

Verstellvorrichtungen zum Verstellen der Azimutposition einer Gondel einer Windenergieanlage sind bekannt. Viele gängige Vorrichtungen verwenden hierfür mehrere Verstellantriebe, die mit einem Zahnritzel in einen Zahnkranz eingreifen und dadurch die Azimutverstellung vorsehen können. Nach Erreichen einer neuen Azimutposition kann diese dadurch festgehalten werden, dass die Antriebe gestoppt und teilweise gegeneinander verspannt werden, um dadurch auch etwaige Probleme einer Getriebelose zwischen Ritzel und Zahnkranz auszuschließen. Problematisch kann hierbei ein Verschleiß zwischen Antriebsritzel und Zahnkranz sein, bzw. der Aufwand und die Störanfälligkeit hier eine Schmierung vorzusehen.

Es sind auch hydraulische Systeme bekannt, wie beispielsweise aus der internationalen Anmeldung WO2010/029210. Dort wird ein hydraulisches System beschrieben, das mehrere hydraulische Einheiten umfasst, die jeweils einen Zylinderkolben mit einem Bremsbackensystem aufweisen. Mit diesem Bremsbackensystem wird an einen Flansch gegriffen, um dieses Bremsbackensystem dort in Grunde festzusetzen, um dann die Hydraulik zu betätigen und damit diesen Bremsscheibenring und eine damit zusammenhängende Gondel zu bewegen. Die Zuverlässigkeit der Azimutverstellung und im Übrigen auch des Haltens der Gondel in einer gewählten Azimutposition hängt auch maßgeblich von der Qualität, zumindest Funktionstüchtigkeit dieses Bremsbackensystems ab.

Das Dokument EP0952337 B1 betrifft ebenfalls ein hydraulisches System, bei dem mehrere Kraftübertragungselemente an einen Zahnkranz angreifen, an den sie von innen gepresst werden. Entsprechend können hier ähnliche Probleme im Zusammenhang mit dem Zahnkranz und den daran angreifenden Gegenelementen auftreten, wie im Falle der oben beschriebenen Azimutverstellung mittels Ritzeln und passendem Zahnkranz. Darüber hinaus benötigt die Lösung dieses letzten Dokumentes sowohl einen Aktuator zum Pressen des Kraftübertragungselementes gegen den Zahnkranz, als auch zum Ausüben der eigentlichen Bewegung. Sofern hiermit überhaupt auch eine Zugkraft auf den Zahnkranz ausgeübt werden kann, arbeitet eine solche jedenfalls gegen die Presskraft, mit der das Kraftübertragungselement gegen den Zahnkranz gedrückt wird.

Im Ergebnis werden hier Probleme der hydraulischen Antriebe mit den Problemen der Verwendung eines Zahnkranzes unnötig kombiniert.

Aus US 20137149146 A1 ist ein Gierbetätigungs- und Bremssystem zum Verstellen einer Gondel um eine Hochachse einer Windenergieanlage bekannt. Das Gierbetätigungs- und Bremssystem weist einen fest mit dem Turm verbundenen Bremsrotor und einen mit der Gondel verbundenen Anker mit zwei damit gekoppelten Bremssätteln auf.

EP 1 659 286 A1 oder KR 101 346 178 B1 zeigen Vorrichtungen zum Verstellen eines Antriebsstranges einer Windenergieanlage für die Montage/Demontage der Rotorblätter an der Rotornabe. Die Vorrichtungen umfassen Adapterscheiben mit Bohrungen, an denen über manuell befestigbare Bolzen oder Hebel Verstellzylinder angreifen.

Aus DE 10 2011 017 801 A1 ist ein Generator für eine Windenergieanlage bekannt, der einen Generatorstator und einen Generatorrotor aufweist. Ferner sind Verschiebeeinheiten mit Hydraulikzylindern vorgesehen, welche mit einem ersten Ende mit dem Generatorstator und mit dem zweiten Ende mit dem Generatorrotor gekoppelt sind, über die eine Verstellbewegung zwischen Generatorrotor und Generatorstator erfolgt.

Das Deutsche Patent- und Markenamt hat in der Prioritätsanmeldung zu vorliegender PCT-Anmeldung folgenden Stand der Technik recherchiert: EP 0 754 881 A2.

Der vorliegenden Erfindung liegt somit die Aufgabe zugrunde, zumindest eines der oben genannten Probleme zu adressieren. Insbesondere soll eine Lösung für eine Azimutverstellung vorgeschlagen werden, die möglichst zuverlässig, einfach, platzsparend und/oder möglichst kostengünstig ausgeführt werden kann. Zumindest soll gegenüber dem bisher Bekannten eine alternative Lösung vorgeschlagen werden.

Erfindungsgemäß wird eine Verstellvorrichtung gemäß Anspruch 1 vorgeschlagen.

Diese Verstellvorrichtung umfasst einen Lochflansch mit Bohrungen und wenigstens ein Verstellmittel. Das Verstellmittel umfasst einen Greifabschnitt, der an den Lochflansch angreifen kann. Das Verstellmittel umfasst auch einen Befestigungsabschnitt, mit dem es an einem Verankerungspunkt der Windenergieanlage befestigt werden kann. Schließlich umfasst das Verstellmittel zum Ausüben einer linearen Bewegung zwischen dem Greifabschnitt und dem Befestigungsabschnitt einen Linearantrieb. Der Lochflansch und der Verankerungspunkt sind dadurch relativ zueinander bewegbar. Entsprechend ist der Lochflansch fest mit der Gondel und der Verankerungspunkt fest mit dem Turm der Windenergieanlage verbunden, oder umgekehrt. Die Gondel ist entsprechend relativ zum Turm drehbar gelagert. Dazu ist ein Lager vorgesehen, das besonders als Kugeldrehverbindung vorgesehen ist. Das Lager kann auch als Azimutlager bezeichnet werden. Das Verstellmittel kann also eine lineare Bewegung zwischen dem Lochflansch und dem Befestigungsabschnitt und damit zwischen der Gondel und dem Turm bzw. zwischen dem Turm und der Gondel initiieren. Das erfolgt durch den Linearantrieb, der die entsprechende Bewegung zwischen dem Greifabschnitt und dem Befestigungsabschnitt initiiert und dadurch, wenn der Greifabschnitt fest an dem Lochflansch angreift, die Bewegung zwischen Gondel und Turm initiiert. Dazu ist der Lochflansch besonders bevorzugt an einem Teil der Kugeldrehverbindung befestigt, insbesondere in einem Bereich, in dem sonst ein Zahnkranz vorgesehen wäre. Ein solcher Zahnkranz wird somit eingespart bzw. durch den Lochflansch ersetzt. Dabei ist ein Lochflansch einfacher herzustellen und weniger verschleißanfällig.

Die Bewegung kann dann initiiert werden, wenn der Greifabschnitt fest an dem Lochflansch angreift und dafür weist der Greifabschnitt einen beweglichen Fixierstift auf. Dieser kann in eine der Bohrungen des Lochflansches eingreifen, indem er in die entsprechende Bohrung hineingeschoben wird. Der Fixierstift kann zylindrisch oder in geringem Maße konisch ausgebildet sein.

Das Verstellmittel ist also im Grunde dauerhaft - dabei aber gegebenenfalls beispielsweise schwenkbar - an dem Verankerungspunkt befestigt. An dem Lochflansch kann das Verstellmittel wie über den Greifabschnitt temporär befestigt werden, nämlich nur dann, wenn der bewegliche Fixierstift in eine Bohrung des Lochflansches eingreift. Im Übrigen könnten beispielsweise auch mehrere Fixierstifte vorgesehen sein.

Wenn der Greifabschnitt also an dem Lochflansch fixiert ist, kann die Azimutbewegung durchgeführt werden und für ein Versetzen des Greifabschnitts kann dieser durch Lösen des Wegs eines Fixierstifts ebenfalls von dem Lochflansch zumindest insoweit gelöst werden als dass er entlang des Lochflansches verschoben werden kann.

Als ein weiterer Vorteil ergibt sich, dass die Halterungen, besonders am Verankerungspunkt nicht so genau eingestellt zu werden brauchen, eine Einstellung über die Verstellmittel erfolgen kann.

Der Greifabschnitt und/oder der Befestigungsabschnitt können jeweils über eine Kugeldrehverbindung mit dem Linearantrieb verbunden sein.

Vorzugsweise ist der Linearantrieb als hydraulischer Linearantrieb ausgebildet. Dadurch kann ein Antrieb die Vorzüge eines hydraulischen Antriebs nutzen, nämlich insbesondere die Eigenschaft, hohe lineare Kräfte aufbringen zu können. Weitere Vorzüge werden unten noch beschrieben. Durch den beweglichen Fixierstift kann der jeweilige Greifabschnitt umgesetzt werden, um dadurch auch die Azimutposition nicht nur in einem eingeschränkten Winkelbereich verändern zu können. Durch ausreichend häufiges Umsetzen kann die Windenergieanlage dadurch wenigstens um 360° in ihrer Azimutstellung bewegt werden.

Vorzugsweise weist der Lochflansch einen umlaufenden Führungsabschnitt auf. Dies kann beispielsweise eine umlaufende Schiene oder eine umlaufende Nut oder ein umlaufender Vorsprung sein. Der Greifabschnitt weist dazu einen an diesen umlaufenden Führungsabschnitt angepassten Laufabschnitt auf. Der Greifabschnitt kann also beispielsweise einen Nutabschnitt aufweisen, der in Größe und Form an einen umlaufenden Vorspruch des Lochflansches angepasst ist. Wird nun der Fixierstift gelöst, führt eine Betätigung des Linearantriebs nicht mehr zu einer relativen Bewegung des Lochflansches zum Verankerungspunkt, sondern zu einem Verschieben des Greifabschnitts entlang des Lochflansches. Besonders durch einen hydraulischen Linearantrieb kann hierbei auch sehr präzise eine Position eingestellt werden. Insbesondere wird der Greifabschnitt in dieser Art und Weise in eine neue Position entlang des Lochflansches verschoben, in der er mit dem Fixierstift in eine andere Bohrung eingreifen kann und sich dadurch an einer neuen Position des Lochflansches fixiert.

Es kann somit auf einfache Art und Weise ein Versetzen dieses Greifabschnitts vorgenommen werden. Durch die Fixierung mittels wenigstens eines Fixierstiftes in einer Bohrung kann diese Fixierung des Greifabschnitts an dem Lochflansch gleichermaßen Zug- und Schubkräfte aufnehmen. Die Fixierung ist im Wesentlichen spielfrei erzielbar und ein Verschleiß kann ebenfalls so gut wie ausgeschlossen, zumindest sehr gering gehalten werden.

Eine weitere Ausführungsform schlägt vor, dass die Bohrungen des Lochflansches mit gehärteten Hülsen ausgekleidet sind. Dadurch kann ein etwaiger noch verbleibender oder zumindest zu befürchtender Verschleiß weiter verringert werden. Dabei kann eine solche gehärtete Hülse besonders einfach in eine Bohrung wie eine Bohrung in dem Lochflansch eingesetzt werden.

Gemäß einer Ausgestaltung wird der hydraulische Linearantrieb über Steuerventile angesteuert. Über diese Steuerventile wird die Hydraulikflüssigkeit einem Hydraulikzylinder zugeführt, beziehungsweise von ihm abgeführt, um dadurch die lineare Bewegung zwischen dem Greifabschnitt und dem Befestigungsabschnitt zu bewirken. Ein Schließen der Steuerventile führt dazu, dass die Bewegung des Linearantriebs entsprechend unterbunden wird. Die Gondel kann dadurch in ihrer aktuellen Azimutposition gehalten werden. Somit kann das Halten der Gondel in ihrer aktuellen Azimutposition praktisch ohne Energieaufwand dauerhaft gewährleistet werden. Besonders wenn die Steuerventile sogar selbstschließend sind, kann dieses Halten ohne Energieaufwand durchgeführt werden.

Natürlich muss dafür auch der betreffende Greifabschnitt an den Lochflansch angreifen. Auch hier kann der Fixierstift, beziehungsweise eine entsprechende Bewegungsmechanik so ausgebildet sein, dass seine Ruheposition diejenige ist, bei der er in eine Bohrung des Lochflansches eingreift.

Auch wenn gemäß einer anderen Ausführungsform ein anderer Linearantrieb, als ein hydraulischer Linearantrieb verwendet wird, beispielsweise ein elektrischer, kann der Linearantrieb selbsthemmend ausgebildet sein. Beispielsweise ist ein Spindelantrieb oder Schneckenantrieb mit geringer Steigung regelmäßig selbsthemmend. Es kann also auch dadurch auf einfach Art und Weise, vorzugsweise ohne dauerhafte Ansteuerung, eine aktuelle Azimutposition der Gondel gehalten werden.

Vorzugsweise ist der Linearantrieb mit einem Dämpfungssystem versehen. Dies ist insbesondere auch für den Zustand, in dem die Gondel in ihrer Azimutposition gehalten wird, von Bedeutung. Im Falle einer Böe, die besonders auch zu einem Torsionsmoment auf die Gondel um die Turmachse führt, kann ein solches Dämpfungssystem, das nämlich eine Elastizität mit Dämpfung umfasst, einem solchen Torsionsmoment zu einem gewissen Teil nachgeben und dadurch Belastungsspitzen vermeiden.

Ein solches Dämpfungssystem umfasst besonders im Fall der Verwendung eines hydraulischen Linearantriebs eine Bypassöffnung für die Hydraulikflüssigkeit. Die Hydraulikflüssigkeit kann hierdurch zumindest ein wenig durch einen solchen Bypass ausweichen und dadurch einer Kraft auf den Zylinder, besonders ausgelöst durch ein oben beschriebenen Torsionsmoment, nachgeben. Besonders die Größe eines solchen Bypasses als auch das sich anschließende hydraulische System können die Größe und Art der Elastizität und ihrer Bedämpfung beeinflussen.

Ein solcher beschriebener Bypass für das Hydrauliköl kann vorzugsweise im Stempel des hydraulischen Linearantriebs vorgesehen sein, also in dem Stempel, der in den betreffenden Hydraulikzylinder bewegt wird.

Vorzugsweise werden vier Verstellmittel vorgesehen, oder eine Vielzahl von vier. Bei vier Verstellmitteln ist die Verstellvorrichtung dazu vorbereitet, dass zum Verstellen der Azimutposition jeweils zwei Verstellmittel mit ihren Greifabschnitten an dem Lochflansch fixiert sind, also im Eingriff sind, während die anderen beiden Verstellmittel mit ihren Greifabschnitten von einer Lochposition zu einer anderen umgesetzt werden. Dadurch dass somit jeweils immer zwei, beziehungsweise wenigstens zwei Verstellmittel im Eingriff sind, kann eine möglichst symmetrische Verstellung, also symmetrisch verteilte Krafteinwirkung erreicht werden.

Es wird auch im Grunde eine fliegende Umsetzung ermöglicht. Es kann nämlich so gesteuert werden, dass die Verstellmittel, die jeweils grade nicht im Eingriff sind, aktiv in eine neue Position bewegt werden, also so, dass deren Greifabschnitte jeweils an einer neuen Position am Lochkranz eingreifen können. Dabei erfolgt dieses Umsetzen so, dass auch das Fixieren mittels der Fixierstifte während der Bewegung, also während einer stattfindenden Veränderung der Azimutposition durchgeführt wird. Dafür kann eine Synchronisation der Bewegungen vorgesehen sein, in dem sich die Verstellmittel, die grade umgesetzt werden sollen, so mit den anderen synchronisieren, dass sich ihre Greifabschnitte mit dem Lochflansch mitbewegen, also relativ zum Lochflansch stehen. Diese frisch versetzten Greifabschnitte können dann mittels der Fixierbolzen am Lochflansch fixiert werden und sie können dann die Bewegung, also das Verschieben übernehmen. Es findet also ein Wechsel statt zwischen den Verstellmitteln, die sich grade versetzt haben und nun die Azimutverstellung übernehmen und den Verstellmitteln die bis dahin die Azimutverstellung durchgeführt haben und nun durch ihre Fixierstifte gelöst werden können, um sich entsprechend umzusetzen.

Auf diese Art und Weise kann eine kontinuierliche Azimutverstellung durch diesen fliegenden Wechsel zwischen Verstellmitteln die im Eingriff sind und welchen die nicht im Eingriff sind, erreicht werden.

Gleichwohl ist es aber auch möglich, zumindest eine diskontinuierliche Azimutverstellung mit nur einem einzigen Verstellmittel zu bewerkstelligen. In diesem Fall wäre aber außerdem ein weiteres Fixiermittel nötig, das den Lochflansch relativ zu einem Verankerungspunkt festsetzen kann, während das eine Verstellmittel umgesetzt wird.

Vorzugsweise ist die Verstellvorrichtung dazu vorbereitet, dass wenigstens einer der Linearantriebe zumindest beim Erreichen einer neuen Azimutposition so betrieben wird, dass er eine Verspannung aufbaut, um dadurch ein Spiel beziehungsweise eine Lose im Sinne einer Getriebelose zwischen dem Lochflansch und dem Verankerungspunkt zu vermeiden.

Wenn also temporär eine gewünschte Azimutposition erreicht ist, wird zumindest mit einem Verstellmittel eine Kraft zum Verstellen der Azimutposition ausgeübt, die einem anderen Verstellmittel, insbesondere eines, das bereits in einer Halteposition ist, entgegen gerichtet ist.

Eine weitere Ausführungsform ist dadurch gekennzeichnet, dass für jedes Verstellmittel ein Messmittel vorhanden ist, um eine Längenmessung eines Verstellzylinders des Verstellmittels vorzunehmen. Durch diese Längenmessung kann insbesondere eine Bohrung des Lochflansches gefunden werden, um dann mittels des Fixierstiftes den Greifabschnitt zu fixieren. Außerdem oder alternativ kann das Messmittel auch dazu verwendet werden, die Azimutposition abzuleiten. Sofern die verwendete Steuerung die Information hat, in welcher Bohrung der betreffende Greifabschnitt grade fixiert ist, kann schließlich über die Positionsmessung des Verstellmittels auch die Azimutposition der Gondel sehr präzise erfasst werden. Zum Erfassen der jeweils aktuell verwendeten Bohrung des Lochflansches kann an dem Lochflansch eine Kennung vorgesehen sein und/oder die Steuerung kann die durchgeführten Bewegungsoperationen aufzeichnen oder zumindest auswerten, um jeweils die aktuelle Bohrung zu kennen. Außerdem oder alternativ wird für das Finden einer Bohrung ein entsprechender Sensor vorgeschlagen, der insbesondere am Greifabschnitt angeordnet ist und eine Bohrung erkennen kann, bspw. durch eine Abstandsmessung oder Metallerkennung.

Vorzugsweise werden somit die einzelnen Bohrungen des Lochflansches und/oder ihre Positionen identifiziert, um daraus die aktuelle Azimutposition der Gondel zu bestimmen. Eine solche Identifikation kann beispielsweise durch eine optische oder elektronische Kennung, wie ein RFID-Chip durchgeführt sein.

Gemäß einer Ausgestaltung wird vorgeschlagen, dass eine Informationsverbindung zur Übertragung von Informationen zwischen den Verstellmitteln besteht. Diese kann vorzugsweise über eine zentrale Steuereinheit bestehen oder die Verstelleinheiten kommunizieren unmittelbar untereinander wie beispielsweise über eine ringförmige Netzarchitektur. Hierüber können insbesondere auch die Aufgaben koordiniert werden, welche Verstelleinheit grade im Eingriff ist und eine Azimutposition verändert oder hält und welche Verstelleinheit aktuell ihre Position auf dem Lochflansch versetzt. Besondere Kommunikation wird entsprechend vorgeschlagen für den oben beschriebenen Vorgang eines fliegenden Wechsels zwischen den Verstellmitteln, die im Eingriff sind und denen, die versetzt werden.

Gemäß einer weiteren Ausführungsform wird vorgeschlagen, dass jeder Greifabschnitt wenigstens zwei Fixierstifte zum Eingreifen in entsprechend zwei Bohrungen aufweist. Dadurch kann der Greifabschnitt nicht nur in Umfangsrichtung an dem Lochflansch fixiert werden, sondern es kann durch die Fixierung mittels wenigstens zweier Fixierstifte in zwei Bohrungen auch eine Kippstabilität erreicht werden. Das ermöglicht, dass der Führungsabschnitt, also eine Führungsnut, Führungsschiene oder dergleichen lediglich den Greifabschnitt beim Verschieben führen muss, dabei aber vermieden wird, dass dieser Führungsabschnitt Kippkräfte, nämlich von einem Kippen des Greifabschnitts um eine Längsachse seines Fixierstifts, auf den Greifabschnitt aufnehmen muss.

Eine Ausgestaltung der Verstellvorrichtung sieht vor, dass der Greifabschnitt einen Außenumfang des Lochflansches umgreift und entlang dieses Außenumfangs verschiebbar angeordnet ist. Die Verstellvorrichtung ist also dazu ausgebildet, den Greifabschnitt und entsprechend auch den Linearantrieb und den Befestigungsabschnitt radial außerhalb des Lochflansches vorzusehen. Dadurch kann jeglicher Platz innerhalb des Lochflansches, also insbesondere zum Turminneren hin, frei bleiben. Es wird hierdurch eine Lösung geschaffen, die kaum Platz in Anspruch nimmt. Dies kann insbesondere auch dadurch ermöglicht werden, dass ein Lochflansch mit Bohrungen vorgesehen ist, an denen der Greifabschnitt und damit das Verstellmittel angreift. Weil durch die Befestigung in solchen Bohrungen eine Kraft in jede Richtung, also insbesondere Zugkraft und Schubkraft in gleichermaßen übertragen werden kann, ist eine solche Anordnung im radialen Außenbereich des Lochflansches mit der vorgeschlagenen Lösung gut realisierbar.

Vorzugsweise ist dafür der umlaufende Führungsabschnitt ebenfalls am Umfang oder zumindest im Bereich des Umfangs, nämlich zwischen den Bohrungen und dem radialen Außenumfang angeordnet, also radial außerhalb der umlaufenden Bohrungsreihe.

Erfindungsgemäß wird zudem eine Windenergieanlage gemäß Anspruch 11 vorgeschlagen. Eine solche Windenergieanlage umfasst einen Turm und eine drehbar darauf gelagerte Windenergieanlagengondel. Zum Verstellen der Azimutposition der Gondel wird eine Verstellvorrichtung gemäß wenigstens einer der vorstehend beschriebenen Ausführungsformen verwendet. Entsprechend kann die Windenergieanlage im Bereich der Azimutverstellung durch die Verwendung solcher Verstellvorrichtungen verbessert werden, insbesondere günstiger und zuverlässiger realisiert werden.

Erfindungsgemäß wird zudem ein Verstellmittel gemäß Anspruch 13 vorgeschlagen, das die Merkmale aufweist, die zumindest oben im Zusammenhang mit wenigstens einer Ausführungsform der Verstellvorrichtung für das Verstellmittel beschrieben wurden. Das Verstellmittel weist also einen Greifabschnitt, einen Befestigungsabschnitt und einen dazwischen angeordneten Linearantrieb auf und diese Elemente verhalten sich so, wie oben im Zusammenhang mit zumindest einer Ausführungsform der Verstellvorrichtung beschrieben wurde. Vorzugsweise weisen die Verstellmittel auch eine Kommunikationseinheit auf oder einen Anschluss zu einer solchen Kommunikationseinheit, um die oben beschriebenen Koordinierungen vornehmen zu können.

Vorzugsweise ist die Windenergieanlage dadurch gekennzeichnet, dass der Lochflansch an einem Turmschaft des Turmes oder an dem Azimutlager, insbesondere an einer Kugeldrehverbindung, befestigt ist, insbesondere verschraubt, und sich von dort radial nach außen erstreckt. Die Windenergieanlage kann dadurch die Verstellmittel außerhalb des Turmes anordnen, was aber innerhalb einer Gondelverkleidung sein kann, und dadurch kann eine sehr platzsparende Lösung geschaffen werden. Außerdem oder alternativ sind die Bohrungen des Lochflansches bezogen auf den Turm oder bezogen auf das Azimutlager radial nach außen angeordnet. Die Bohrungen bilden somit insgesamt eine umlaufende Lochreihe, um einen gemeinsamen Mittelpunkt und diese Lochreihe ist außerhalb des Turmes und/oder außerhalb des Azimutlagers, bezogen auf eine radiale Richtung in dieser Höhe des Turmes. Auch dadurch wird eine platzsparende Anordnung ermöglicht, bei der die Verstellmittel radial außenliegend vorgesehen sind.

Erfindungsgemäß wird zudem ein Verfahren zum Verstellen einer Azimutposition gemäß Anspruch 14 vorgeschlagen. Dieses Verfahren verwendet eine Verstellvorrichtung gemäß wenigstens einer der beschriebenen Ausführungsformen und/oder sie verwendet ein wie oben beschriebenes Verstellmittel. Das Verfahren umfasst die Schritte
a) Betätigen wenigstens eines mit dem Lochflansch im Eingriff befindlichen ersten Verstellmittels, so dass eine Bewegung zwischen Lochflansch und Verankerungspunkt und dadurch eine Azimutverstellung der Gondel resultiert,
b) Umsetzten wenigstens eines weiteren Verstellmittels jeweils von einer Bohrung zu einer anderen Bohrung des Lochflansches,
c) Betätigen des nun mit dem Lochflansch im Eingriff befindlichen wenigstens einen weiteren Verstellmittels, so dass eine weitere Drehbewegung zwischen Loch flansch und Verankerungspunkt und dadurch eine weitere Azimutverstellung der Gondel resultiert,
d) Umsetzen des wenigstens einen ersten Verstellmittels jeweils von einer Bohrung in eine andere Bohrung des Lochflansches und
e) Wiederholen der Schritte a) bis d), bis die Gondel ihre gewünschte Azimutposition erreicht hat, oder
f) alternativ zu den Schritten b) und c) Fixieren des Lochflansches durch wenigstens eine andere Fixiervorrichtung, und
g) alternativ zu Schritt e) Wiederholen der Schritte a), f) und d), bis die Gondel ihre gewünschte Azimutposition erreicht hat..

Es wird also ein Verstellmittel betätigt, das mit dem Lochflansch im Eingriff ist. Hierdurch ergibt sich eine Drehbewegung zwischen Lochflansch und Verankerungspunkt und dadurch die Azimutverstellung. Grundsätzlich kommt es nicht darauf an, ob der Lochflansch feststeht, also mit dem Turm verbunden ist, und der Verankerungspunkt beweglich ist, also mit der Gondel verbunden ist, oder ob der Lochflansch mit der Gondel beweglich ist und der Verankerungspunkt fest an dem Turm befestigt ist. Entscheidend ist, dass eine Relativbewegung erreicht wird, sodass sich die Gondel in ihrer Azimutposition dadurch verstellen lässt.

Es wird dann oder währenddessen ein weiteres Verstellmittel, das grade nicht im Eingriff ist, auf dem Lochflansch umgesetzt. Diese Umsetzungen erfolgen so, dass das Verstellmittel, nämlich sein Greifabschnitt, durch entsprechendes Lösen des Fixierstiftes von der entsprechenden Bohrung gelöst wird. Der Greifabschnitt wird dabei nicht vollständig gelöst, sondern nur so, dass er von der entsprechenden Bohrung frei ist, sich aber geführt entlang des Lochflansches bewegen kann, nämlich entlang einer umlaufenden Schiene, einer umlaufenden Nut, oder ähnlichem Führungsmittel. Der Greifabschnitt ist also insoweit gelöst und das Betätigen seines Linearantriebs führt dazu, dass er nun entlang des Lochflansches verschoben wird. Außerdem oder alternativ erfolgt ein Verschieben entlang des Lochflansches auch dadurch, dass ein anderes Verstellmittel die Gondel in ihrer Azimutposition verstellt, also eine Relativbewegung zwischen dem Lochflansch und den Verankerungspunkten vorliegt.

Jedenfalls wird der Greifabschnitt entlang des Lochflansches verschoben und in einer neuen Bohrung fixiert. Dieses wenigstens eine so umgesetzte Verstellmittel kann nun die Ausübung der Drehbewegung übernehmen. Dieses Verstellmittel übt also über seinen Linearantrieb eine Kraft auf den Lochflansch aus und übernimmt dadurch die Verstellung der Azimutposition.

Nun kann das Verstellmittel umgesetzt werden, das anfangs im Eingriff war und die Veränderung der Azimutposition bewirkt hatte. Beim Wechsel kann es vorteilhaft sein, die Hydraulikkreise der Linearantriebe, wenn diese hydraulisch sind, kurzzuschließen, um Kraft beim Ein- bzw. Ausbolzen klein zu halten.

Entsprechend werden diese Schritte wiederholt, gemäß derer ein Verstellmittel wenigstens im Eingriff ist und ein anderes Verstellmittel verschoben wird und diese Verstellmittel nach einer teilweisen Verschiebung im Grunde ihre Aufgaben tauschen.

Alternativ könnte aber auch eine Verstellung mit nur einem Verstellmittel vorgesehen sein. Hierfür würde nur dieses eine Verstellmittel die Bewegung der Azimutposition bewirken. Zum Umsetzen müsste dann der Lochflansch relativ zu dem Verankerungspunkt durch ein zusätzliches Mittel fixiert werden. Ein solches zusätzliches Mittel könnte beispielsweise einem Verstellmittel mit einem Greifabschnitt entsprechen, ohne aber einen aktiven Linearantrieb aufzuweisen. Es wäre also im Grunde nur der Greifabschnitt vorhanden, der zum Umsetzen des Verstellmittels mittels Fixierstift fixiert wird und solange die Azimutposition halten kann, bis das Verstellmittel umgesetzt ist.

Vorzugsweise wird wenigstens einer der Linearantriebe zumindest beim Erreichen jeweils einer neuen gewünschten Azimutposition so betrieben, dass er eine Verspannung aufbaut. Dieser eine Linearantrieb, also das eine betreffende Verstellmittel, baut also eine Kraft gegen ein anderes Verstellmittel auf und kann dadurch Getriebelose oder Getriebespiel, beziehungsweise sinngemäß ein minimales Spiel zwischen Fixierstiften und Bohrungen vermeiden.

Die Erfindung wird nun nachfolgend beispielhaft und in Bezugnahme auf die begleitenden Figuren näher beschrieben.
- Figur 1: zeigt eine Windenergieanlage in einer perspektivischen Ansicht.
- Figur 2: zeigt sehr schematisch eine Verstellvorrichtung gemäß einer ersten Ausführungsform.
- Figur 3: zeigt einen Ausschnitt einer erfindungsgemäßen Verstellvorrichtung gemäß einer zweiten Ausführungsform in einer perspektivischen Darstellung.
- Figur 4: zeigt einen Ausschnitt einer Verstellvorrichtung gemäß einer dritten Ausführungsform in einer perspektivischen Darstellung.
- Figur 5: zeigt schematisch und in einer perspektivischen Darstellung einen Teil einer Gondel einer Windenergieanlage mit einer Verstellvorrichtung gemäß der dritten Ausführungsform.
- Figur 6: zeigt einen Ausschnitt einer Gondel gemäß Fig.5 in einer perspektivischen Ansicht von unten.

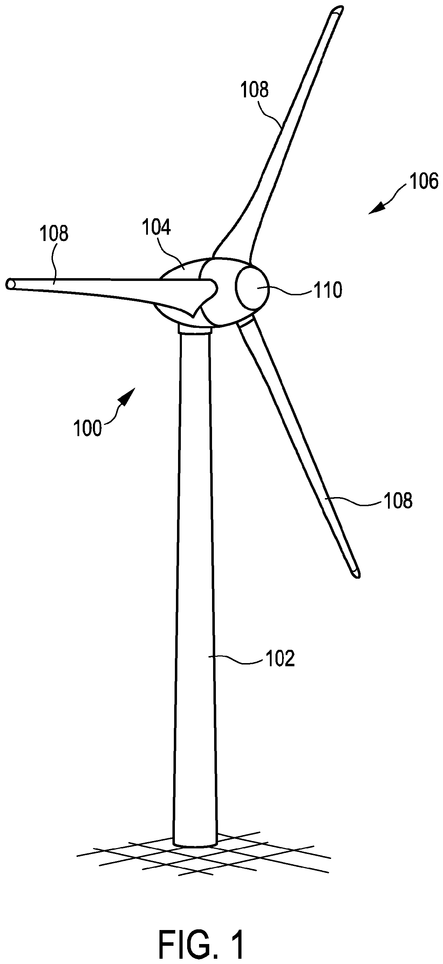

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

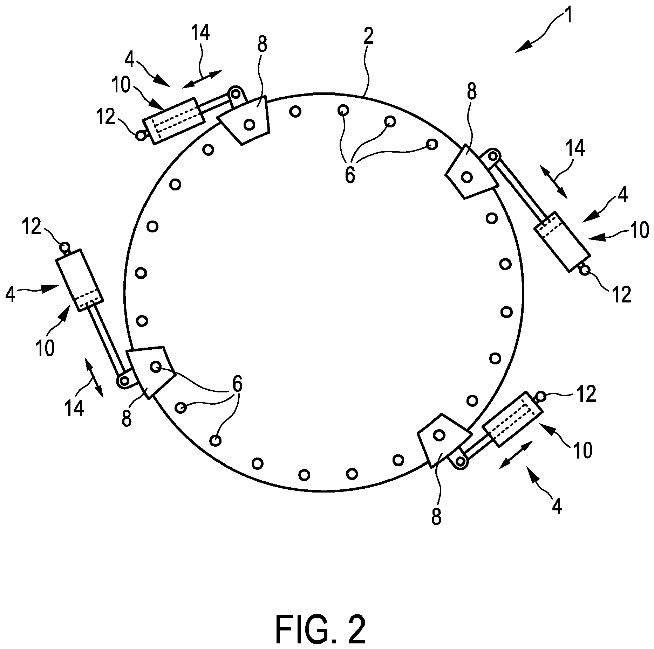

Die Verstellvorrichtung 1 der Figur 2 ist dort sehr schematisch in einer Draufsicht dargestellt und zeigt dabei einen Lochflansch 2 und vier Verstellmittel 4. Der Lochflansch 2 weist eine Vielzahl von Bohrungen 6 auf. Der Lochflansch 2 ist dabei bestimmungsgemäß mit dem feststehenden Teil des Azimutlagers verbunden und das Azimutlager kann besonders bevorzugt als Kugeldrehverbindung ausgebildet sein. Der Lochflansch 2 kann dabei eine große mittlere Öffnung aufweisen, durch die auch Personen hindurch steigen können, um vom Turm hoch in die Gondel zu gelangen, die hier aber der Einfachheit halber nicht dargestellt ist.

Jedes Verstellmittel 4 sitzt mit einem Greifabschnitt 8 auf dem Lochflansch 2 und kann mit einer der Bohrungen 6 mittels eines Fixierstiftes fixiert sein. Der Greifabschnitt 8 kann auch als "Schuh" bezeichnet werden und das Fixieren mittels Fixierstift kann auch als "Verbolzen" bezeichnet werden, nämlich mittels eines Bolzens, der axial in die betreffende Bohrung 6 eingeführt wird. Der Greifabschnitt bzw. Schuh umfasst dafür ein Verbolzungsmittel, oder einen Verbolzungsautomaten, der das Verbolzen möglichst eigenständig durchführen kann.

Jedes Verstellmittel 4 weist somit einen Greifabschnitt 8, einen Linearantrieb 10 und einen Befestigungsabschnitt 12 auf. Der Befestigungsabschnitt 12 ist am Maschinenträger der Gondel befestigt. Durch ein Betätigen des Linearantriebs 10 kann somit eine Kraft und Bewegung zwischen dem Greifabschnitt 8 und dem Befestigungsabschnitt 12 ausgeübt werden. Der Befestigungsabschnitt 12 verschiebt sich damit also relativ zum Greifabschnitt 8. Bei der gezeigten Ausführungsform ist der Befestigungsabschnitt 12 an den Maschinenträger zu befestigen und ein Betätigen des Linearantriebs 10 führt somit zu einem Bewegen des Maschinenträgers und damit der Gondel über den Befestigungsabschnitt 12. Der Lochflansch 2 verändert sich dabei nicht und das Verstellmittel 10 drückt sich somit an diesem Lochflansch ab, oder zieht sich heran. Die möglichen Bewegungen sind durch den Doppelpfeil 14 als Bewegungsrichtung 14 dargestellt.

Wenn der Greifabschnitt 8 nicht an dem Lochflansch 2 durch Verbolzen in einer der Bohrungen 6 befestigt ist, führt die angedeutete Bewegungsrichtung 14 dazu, dass der Greifabschnitt 8 an dem Lochflansch und zwar in Richtung der Reihe der Bohrungen 6 verschoben werden kann. Der Greifabschnitt 8 kann dann in einer anderen Bohrung 6 verbolzt werden.

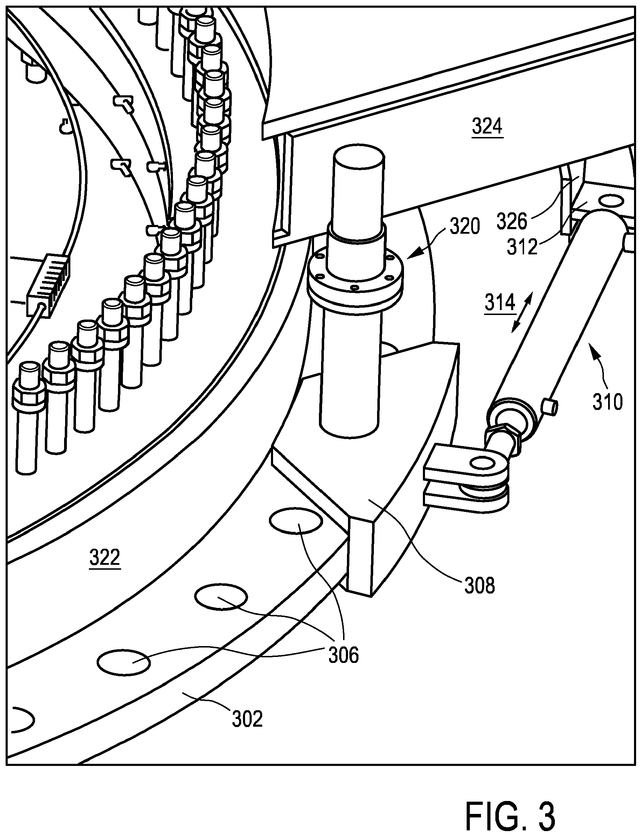

In der Figur 3 ist von einer zweiten Ausführungsform der Lochflansch 302 mit einem Greifabschnitt 308 verdeutlicht. Der Greifabschnitt 308 umfasst ein Fixiermittel 320, das einen Fixierstift in axialer Richtung bewegen kann, um einen solchen in eine der Bohrungen 306 axial einzuführen. Das Fixiermittel 320 kann auch als Verbolzungseinheit bezeichnet werden. Figur 3 verdeutlicht in seinem Ausschnitt, dass der Lochflansch 302 an einem festen Teil des Azimutlagers 322 befestigt ist. Vorzugsweise wird für diese und andere Ausführungsformen als Azimutlager eine Kugeldrehverbindung vorgeschlagen. Ist der Greifabschnitt 308, der auch als Schuh 308 bezeichnet werden kann, an dem Lochflansch 302 verbolzt, also an einer Bohrung 6 fixiert, kann der Linearantrieb 310 eine Bewegung zwischen dem Greifabschnitt 308 und dem Befestigungsabschnitt 312 ausüben. Dadurch wird der Maschinenträger 324, von dem in Figur 3 nur ein kleiner Ausschnitt gezeigt ist, relativ zum Lochflansch 2 und damit auch relativ zum Turm bewegt. Diese Möglichkeit der Bewegung ist durch den Doppelpfeil 314 angedeutet. Der Befestigungsabschnitt 312 ist dafür an einem Verankerungspunkt 326 befestigt, der im Bereich unterhalb des Maschinenträgers 324 angedeutet ist.

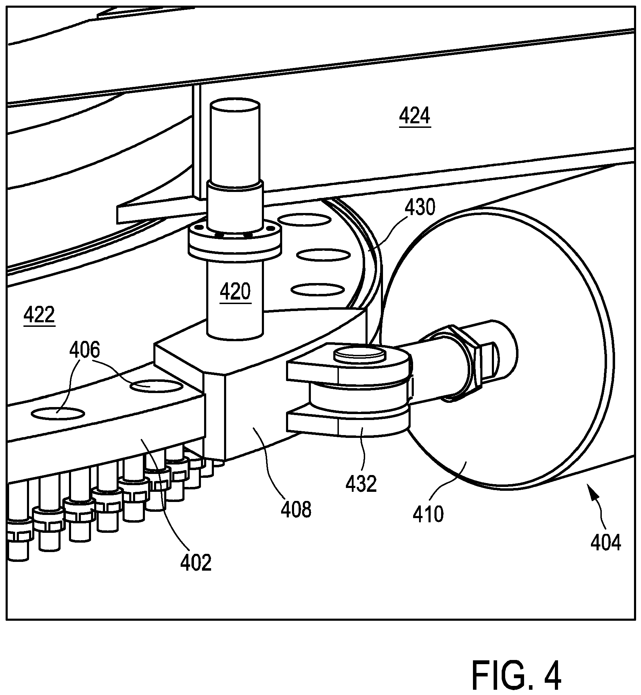

Figur 4 zeigt eine weitere Ausführungsform, bei der ebenfalls der Lochflansch 402 an einem festen Teil des Azimutlagers 422 angeordnet ist. Der Greifabschnitt 408 umgreift den Lochflansch 402 und kann mithilfe des Fixiermittels 420 an einer Bohrung 406 des Lochflansches 402 fixiert werden. Wird der Greifabschnitt 408 nicht fixiert, ist also ein Bolzen oder ein Fixierstift des Fixiermittels 420 gezogen, kann der Greifabschnitt 408 entlang des Lochflansches 402 nämlich entlang der Bohrungen 406 verschoben werden. Er wird dafür durch die umlaufende Nut 430, die somit einen umlaufenden Führungsabschnitt 430 bildet, geführt. Dazu kann der Greifabschnitt 408 einen entsprechenden Vorsprung oder Führungsstift aufweisen, was in Figur 4 aufgrund der Perspektive aber nicht erkennbar ist.

Ansonsten umfasst das hier nur teilweise gezeigte Verstellmittel 404 eine lineare Antriebseinheit 410, die, wie bei den übrigen gezeigten Ausführungsformen, über eine Gelenkverbindung 432 mit dem Greifabschnitt 408 beziehungsweise dem Schuh 408 gekoppelt ist. Ein Betätigen des Linearantriebs 410 resultiert in einer Bewegung, nämlich Schwenkbewegung, des Maschinenträgers 424, der hier auch nur in einem Ausschnitt gezeigt ist.

Der wesentliche Unterschied zwischen den Ausführungsformen der Figur 3 und der Figur 4 dürfte der Durchmesser des Linearantriebs sein.

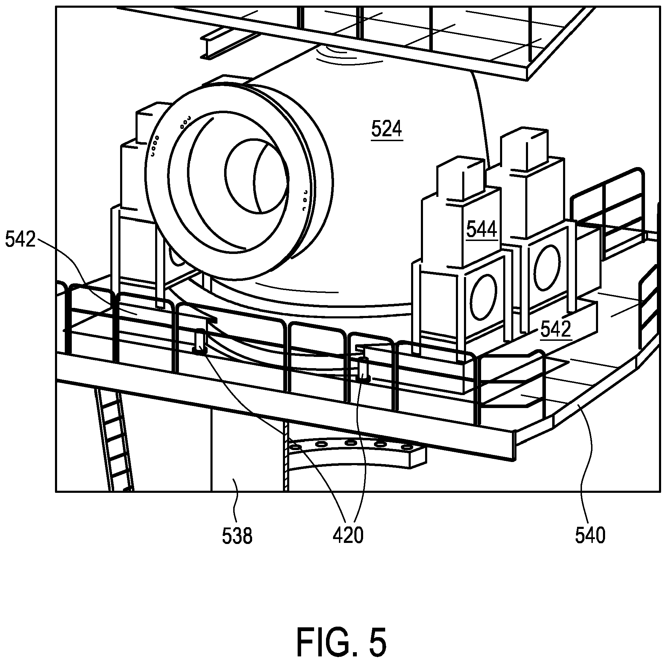

Die perspektivische Darstellung auf einen Teil einer Gondelebene einer Gondel einer Windenergieanlage gemäß Figur 5 verdeutlicht einen erreichten Platzgewinn durch die vorgeschlagene Erfindung. In der Figur 5 ist ein Maschinenträger 524 gezeigt, der bestimmungsgemäß an den gezeigten Generatorflansch 536 den Generator nebst Rotor tragen soll. Außerdem ist ein teilgeschnittener Turmabschnitt 538 gezeigt, auf den der Maschinenträger 524 drehbar gelagert ist. Den Maschinenträger 524 umgibt eine untere Gondelplattform 540, auf der auf einem Azimutpodest 542 Schaltschränke 544 angedeutet sind. Bisherige Azimutverstellungen mittels diverser elektrischer Azimutantriebe, die jeweils mit einem Ritzel auf einen gemeinsamen Innenzahnkranz greifen, haben diese beiden Azimutpodeste 542 für die diversen Azimutantriebe benötigt. Die Verwendung der vorgeschlagenen Verstellmittel zusammen mit dem Lochflansch hat somit diesen Platz als zusätzlichen Platz geschaffen. In der Figur 5 ist insoweit von der nun vorgeschlagenen Verstellvorrichtung nur ein Teil von zwei Fixiermitteln 420 zu erkennen. Die Verstellvorrichtung ist somit zudem sehr platzsparend geworden.

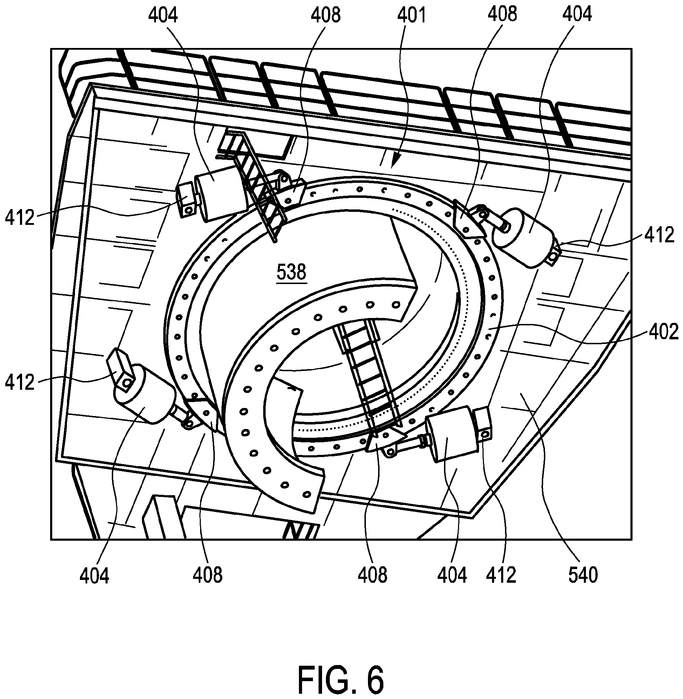

Figur 6 zeigt die Gondelplattform 540 in einer Perspektive von unten, sodass auch wesentlich mehr Details der Verstellvorrichtung 401 zu sehen sind. Die vier Verstellmittel 404 können unterhalb der Gondelplattform 540, aber in der Gondel oder innerhalb einer Gondelverkleidung angeordnet sein und nehmen daher praktisch keinen relevanten Platz in Anspruch. Sie können mit ihren Befestigungsabschnitten 412 am Maschinenträger befestigt sein und mit ihren Greifabschnitten 408 von außen an den Lochflansch 402 angreifen. Jeglicher Innenraum im Turm 538, der hier zur besseren Veranschaulichung nur als Teilschnitt dargestellt ist, bleibt durch die vorgeschlagene Verstellvorrichtung 401 frei.

Vorzugsweise kann der Lochflansch als Scheibe, beziehungsweise als Ring zwischen Lager und Turmflansch verbaut werden. Gegebenenfalls kann hierdurch auch ein kleineres Azimutlager als sonst für eine Konstruktion gleicher Größe verwendet werden.

Nachfolgend werden noch einige ergänzende Aspekte und Vorteile für die vorliegende, nicht auf die Ausführungsformen beschränkte Erfindung beschrieben. Es kann durch die vorgeschlagene Lösung eine Azimutverstellung ohne zusätzliche Bremsen und ohne Verzahnung geschaffen werden.

Besonders ein Verschleiß an Zähnen oder sogar gebrochene Zähne können hierdurch vermieden werden. Solche Probleme können unter Umständen einen hohen Aufwand zur Reparatur bedingen. Gegebenenfalls muss die gesamte Gondel demontiert werden, weil einzelne Zähne eines Zahnkranzes nicht getauscht werden können, sondern der gesamte Zahnkranz zu tauschen wäre.

Die vorgeschlagene Lösung, die insbesondere, wenn auch nicht zwingend, die Verwendung von Hydraulikzylindern vorschlägt, ermöglicht eine Kugeldrehverbindung mit Löchern, also Bohrungen statt Zähnen vorzusehen. Hierdurch kann eine einfache Bearbeitung geschaffen werden. Zwischen Linearantrieb und Greifabschnitt kann ein Kugelgelenk vorgesehen sein. Es können normale Materialien, insbesondere ungehärteter Stahl zumindest für den Lochflansch vorgesehen sein. Ggf. können dabei die Bohrungen durch eine gehärtete Hülse gestärkt werden. Es ist gegenüber bekannten Lösungen auch eine Reduzierung der benötigten Teile erzielbar, was besonders den Wartungsaufwand reduziert.

Es wird somit ein Greifabschnitt oder Schuh an einen hydraulisch ein- und ausfahrbaren Bolzen des Hydraulikzylinders angeordnet, wobei statt eines hydraulischen Systems auch ein Elektrozylinder verwendet werden könnte. Dieser Schuh ist mit dem Hydraulikzylinder verbunden und der Hydraulikzylinder ist wiederum mit dem Maschinenträger beziehungsweise Azimutträger verbunden. Vorzugsweise sind vier Hydraulikzylinder, also vier Stellmittel vorgesehen, damit immer zwei im Eingriff sein können.

Dann schieben also immer zwei Zylinder die Anlage weiter, also die Gondel, wobei beispielsweise pro Zylinderhub eine Verschiebung um 9° vorgesehen sein kann.

Wenn die Zylinder ihre Endlage erreicht haben bleiben sie dann stehen. Die anderen zwei Zylinder werden dann in die jeweils nächsten Löcher eingebolzt, also dort mittels Fixierstiften fixiert und die ersten beiden Zylinder, die eben noch die Anlage weitergeschoben haben, werden dann ausgebolzt, also aus den Bohrungen gelöst. Die zweiten beiden Zylinder übernehmen dann entsprechend die nächste 9°-Grad Azimutverstellung, um bei diesem Beispiel zu bleiben. Die jeweiligen Greifabschnitte können um mehrere Bohrungen weitergeschoben werden, bzw. es können die Bohrungen so dicht vorgesehen sein, dass für den maximalen Weg, im genannten Beispiel 9°, mehrere Bohrungen zur Verfügung stehen, so dass man flexibel ist.

Die Anordnung der Verstellmittel an, in oder unterhalb der Gondel vermeidet Übertragungsstellen, bei denen Hydraulikflüssigkeit über hydraulische Drehverbindungen übertragen werden muss. Dennoch könnte das vorgeschlagene System auch für eine Pitchverstellung oder sogar für eine Verstellung oder zumindest das Festsetzen des Rotors des Generators angewendet werden.

Für die vorgeschlagene Azimutverstellung sind aber solche Drehverbindungen eben nicht notwendig und die Hydraulikleitungen können im Wesentlichen, eventuell bis auf sehr kurze Schläuche, fest verrohrt werden, also durch feste Rohrleitungen ausgebildet sein. Vorteilhaft ist auch, dass zumindest weniger Synchronisierungsaufwand für die Verwendung von vier Verstellmitteln mit jeweils immer nur zwei Verstellmitteln im Eingriff nötig wird, im Vergleich mit der Verwendung von acht oder zwölf elektrischen Verstellmotoren.

Im Übrigen kann die Verstellvorrichtung auch so wirken und aufgebaut sein, dass sie am Turmflansch mit ihren Schuhen, beziehungsweise Greifabschnitten angreift.

## Patentansprüche

1. Verstellvorrichtung (1) zum Verstellen einer Azimutposition einer Gondel (104)
einer Windenergieanlage (100) umfassend
einen umlaufenden, mit Bohrungen versehenen Lochflansch (2), und
wenigstens ein Verstellmittel (4) mit
- einem Greifabschnitt (8) zum Angreifen an dem Lochflansch (2),
- einem Befestigungsabschnitt (12) zum Befestigen an einem Verankerungspunkt (326) der Windenergieanlage (100) und
- einem Linearantrieb (10), zum Ausüben einer linearen Bewegung zwischen dem Greifabschnitt (8) und dem Befestigungsabschnitt (12), wobei
der Lochflansch (2) fest mit der Gondel (104) und der Verankerungspunkt (326) fest mit einem feststehenden Teil der Windenergieanlage (100), verbunden ist, oder umgekehrt, und die Gondel (104) relativ zu diesem feststehenden Teil der Windenergieanlage (100) drehbar gelagert ist, so dass auch der Lochflansch (2) und der Verankerungspunkt (326) relativ zu einander eine Drehbewegung ausführen können, so dass
eine durch den Linearantrieb (10) ausgeübte lineare Bewegung zwischen dem Greifabschnitt (8) und dem Befestigungsabschnitt (12) eine Drehbewegung zwischen dem Lochflansch (2) und dem Verankerungspunkt (326) bewirkt und dadurch eine Azimutverstellung der Gondel (104) bewirkt, **dadurch gekennzeichnet, dass** der Greifabschnitt (8) wenigstens einen beweglichen Fixierstift zum Eingreifen in jeweils eine der Bohrungen (6) des Lochflansches (2) aufweist, um den Greifabschnitt (8) dadurch am Lochflansch (2) lösbar zu fixieren.

2. Verstellvorrichtung (1) nach Anspruch 1,
**dadurch gekennzeichnet, dass**
der wenigstens eine Linearantrieb (10) als hydraulischer Linearantrieb ausgebildet ist, wobei vorzugsweise der hydraulische Linearantrieb (10) über Steuerventile angesteuert wird, über die Hydraulikflüssigkeit einem Hydraulikzylinder zugeführt oder von ihm abgeführt wird, um dadurch die lineare Bewegung zwischen dem Greifabschnitt (8) und dem Befestigungsabschnitt (12) zu bewirken, wobei ein Schließen der Steuerventile die lineare Bewegung unterbindet und dadurch die Gondel (104) in ihrer aktuellen Azimutposition gehalten wird, und/oder dass der Linearantrieb (10) selbsthemmend ausgebildet ist und das Unterbinden der linearen Bewegung durch die Selbsthemmung erfolgt.

3. Verstellvorrichtung (1) nach Anspruch 1 oder 2,
**dadurch gekennzeichnet, dass**
der Lochflansch (2) einen umlaufenden Führungsabschnitt (430), insbesondere eine umlaufende Schiene, eine umlaufende Nut (430) und/oder einen umlaufenden Vorsprung aufweist, und
der Greifabschnitt (8) einen an den umlaufenden Führungsabschnitt (430) des Lochflansches (2) angepassten Laufabschnitt aufweist, um den Greifabschnitt (8) mit diesem Laufabschnitt an dem umlaufenden Führungsabschnitt (430) zu führen, und/oder dass
die Bohrungen (6) des Lochflansches (2) mit gehärteten Hülsen ausgekleidet sind, um insbesondere einen Verschleiß der Bohrungen (6) zu verringern.

4. Verstellvorrichtung (1) nach einem der vorstehenden Ansprüche,
**dadurch gekennzeichnet, dass**
der Linearantrieb (10) mit einem Dämpfungssystem versehen ist, insbesondere, dass ein bzw. der hydraulische Linearantrieb (10) eine Bypassöffnung aufweist, um Hydraulikflüssigkeit zum Erreichen der Dämpfung eine Ausweichmöglichkeit zu schaffen.

5. Verstellvorrichtung (1) nach einem der vorstehenden Ansprüche,
**dadurch gekennzeichnet, dass**
Verstellmittel (4) vorgesehen sind und die Verstellvorrichtung (1) dazu vorbereitet ist, dass zum Verstellen der Azimutposition jeweils 2 Verstellmittel (4) mit ihren Greifabschnitten (8) an dem Lochflansch (2) fixiert sind, während die anderen beiden mit ihren Greifabschnitten (8) von einer Lochposition zu einer anderen umgesetzt werden.

6. Verstellvorrichtung (1) nach einem der vorstehenden Ansprüche,
**dadurch gekennzeichnet, dass**
die Verstellvorrichtung (1) dazu vorbereitet ist, dass der Linearantrieb (10) bzw. wenigstens einer der Linearantriebe (10) zumindest beim Erreichen einer neuen Azimutposition so betrieben wird, dass er eine Verspannung aufbaut, um dadurch ein Spiel bzw. eine Lose zwischen dem Lochflansch (2) und dem Verankerungspunkt (326) zu vermeiden.

7. Verstellvorrichtung (1) nach einem der vorstehenden Ansprüche,
**dadurch gekennzeichnet, dass**
für jedes Verstellmittel (4) ein Messmittel vorhanden ist, zum Vornehmen einer Längenmessung eines Verstellzylinders des Verstellmittels (4), zur Positionierung des Greifabschnitts des Verstellmittels, um dadurch eine Bohrung des Lochflansches zum Fixieren des Greifabschnitts zu finden und/oder um daraus eine Azimutposition abzuleiten.

8. Verstellvorrichtung (1) nach einem der vorstehenden Ansprüche,
**dadurch gekennzeichnet, dass**
die einzelnen Bohrungen (6) des Lochflansches (2) und/oder ihre Positionen identifiziert sind, um daraus die aktuelle Azimutposition der Gondel (104) zu bestimmen.

9. Verstellvorrichtung (1) nach einem der vorstehenden Ansprüche,
**dadurch gekennzeichnet, dass**
eine Informationsverbindung zur Übertragung von Informationen zwischen den Verstellmitteln (4), vorzugsweise über eine zentrale Steuereinheit besteht, um dadurch die Bewegung der Verstellmittel (4) zu koordinieren.

10. Verstellvorrichtung (1) nach einem der vorstehenden Ansprüche,
**dadurch gekennzeichnet, dass**
jeder Greifabschnitt (8) wenigstens zwei Fixierstifte zum Eingreifen in zwei Bohrungen (6) aufweist,
und/oder
der Greifabschnitt (8) einen Außenumfang des Lochflansches (2) umgreift und/oder entlang dieses Außenumfangs verschiebbar angeordnet ist, insbesondere dass ein umlaufender bzw. der umlaufende Führungsabschnitt (430) des Lochflansches (2) am Außenumfang des Lochflansches (2) und/oder zwischen den Bohrungen (6) und dem Außenumfang angeordnet ist und/oder dass ein Azimutlager verwendet wird, das als Kugeldrehverbindung ausgebildet ist.

11. Windenergieanlage (100) umfassend einen Turm (102) und eine drehbar über ein Azimutlager (322) auf dem Turm (102) gelagerte Windenergieanlagengondel (104), wobei zum Verstellen einer Azimutposition der Gondel (104) eine Verstellvorrichtung (1) gemäß einem der vorstehenden Ansprüche verwendet wird.

12. Windenergieanlage (100) nach Anspruch 11,
**dadurch gekennzeichnet, dass**
der Lochflansch (2) an einem Turmschaft des Turmes (102) und/oder an dem Azimutlager (322) befestigt ist und sich insbesondere von dort radial nach außen erstreckt und/oder die Bohrungen des Lochflansches (2) bezogen auf den Turm (102) und/oder bezogen auf das Azimutlager (322) radial nach außen angeordnet sind und/oder dass das Azimutlager als Kugeldrehverbindung ausgebildet ist..

13. Verstellmittel (4) vorbereitet zur Verwendung in einer Verstellvorrichtung (1) gemäß einem der Ansprüche 1 bis 10.

14. Verfahren zum Verstellen einer Azimutposition einer Gondel (104) einer Windenergieanlage (100) mit einer Verstellvorrichtung (1) nach einem der Ansprüche 1 bis 10 und/oder einem Verstellmittel (4) nach Anspruch 13 umfassend die Schritte
a) Betätigen des bzw. wenigstens eines mit dem Lochflansch (2) im Eingriff befindlichen ersten Verstellmittels (4), so dass eine Drehbewegung zwischen Lochflansch (2) und Verankerungspunkt (326) und dadurch eine Azimutverstellung der Gondel (104) resultiert,
b) Umsetzten wenigstens eines weiteren Verstellmittels (4) jeweils von einer Bohrung (6) in eine andere Bohrung (6) des Lochflansches (2),
c) Betätigen des nun mit dem Lochflansch (2) im Eingriff befindlichen wenigstens einen weiteren Verstellmittels (4), so dass eine weitere Bewegung bzw. Drehbewegung zwischen Lochflansch (2) und Verankerungspunkt (326) und dadurch eine weitere Azimutverstellung der Gondel (104) resultiert,
d) Umsetzen des wenigstens einen ersten Verstellmittels (4) jeweils von einer Bohrung (6) in eine andere Bohrung (6) des Lochflansches (2) und
e) Wiederholen der Schritte a) bis d), bis die Gondel (104) ihre gewünschte Azimutposition erreicht hat, oder
f) alternativ zu den Schritten b) und c) Fixieren des Lochflansches (2) durch wenigstens eine andere Fixiervorrichtung, und
g) alternativ zu Schritt e) Wiederholen der Schritte a), f) und d), bis die Gondel (104) ihre gewünschte Azimutposition erreicht hat.

15. Verfahren nach Anspruch 14,
**dadurch gekennzeichnet, dass**
der Linearantrieb (10) bzw. wenigstens einer der Linearantriebe (10) zumindest beim Erreichen einer neuen, gewünschten Azimutposition so betrieben wird, dass er eine Verspannung aufbaut, um dadurch ein Spiel bzw. eine Lose zwischen dem Lochflansch (2) und dem Verankerungspunkt (326) zu vermeiden.

## Claims

1. Adjusting device (1) for adjusting a yaw position of a nacelle (104) of a wind turbine (100), comprising
a circumferential holed flange (2) provided with drilled holes, and
at least one adjusting means (4), having
- a gripping portion (8) for gripping on the holed flange (2),
- a fastening portion (12) for fastening to an anchorage point (326) of the wind turbine (100), and
- a linear drive (10) for exerting a linear movement between the gripping portion (8) and the fastening portion (12), wherein
the holed flange (2) is fixedly connected to the nacelle (104), and the anchorage point (326) is fixedly connected to stationary part of the wind turbine (100) or vice versa, and the nacelle (104) is mounted so as to be rotatable relative to this stationary part of the wind turbine (100), such that the holed flange (2) and the anchorage point (326) can also execute a rotational movement relative to each other, such that
a linear movement exerted between the gripping portion (8) and the fastening portion (12) by the linear drive (10) effects a rotational movement between the holed flange (2) and the anchorage point (326), and thereby effects a yaw adjustment of the nacelle (104), **characterized in that**
the gripping portion (8) has at least one movable fixing pin for engaging in respectively one of the drilled holes (6) of the holed flange (2), in order thereby to fix the gripping portion (8) to the holed flange (2) in a releasable manner.

2. Adjusting device (1) according to Claim 1,
**characterized in that**
the at least one linear drive (10) is realized as a hydraulic linear drive wherein preferably
the hydraulic linear drive (10) is controlled by means of control valves, via which hydraulic fluid is supplied to or drawn off from a hydraulic cylinder, in order thereby to effect the linear movement between the gripping portion (8) and the fastening portion (12), wherein closing of the control valves suppresses the linear movement, and as a result the nacelle (104) is held in its current yaw position, and/or the linear drive (10) is realized is realized so as to be self-locking, and the suppression of the linear movement is effected by the self-locking.

3. Adjusting device (1) according to Claim 1 or 2,
**characterized in that**
the holed flange (2) has a full-perimeter guide portion (430), in particular a full-perimeter rail, a full-perimeter groove (430) and/or a full-perimeter projection, and
the gripping portion (8) has a running portion matched to the full-perimeter guide portion (430) of the holed flange (2), in order to guide the gripping portion (8), by means of this running portion, on the full-perimeter guide portion (430)
and/or that
the drilled holes (6) of the holed flange (2) are lined with hardened sleeves, in order, in particular, to reduce wear on the drilled holes (6).

4. Adjusting device (1) according to any one of the preceding claims,
**characterized in that**
the linear drive (10) is provided with a damping system, in particular a, or the, hydraulic linear drive (10) has a bypass opening, in order to provide a diversion possibility for hydraulic fluid to reach the damping.

5. Adjusting device (1) according to any one of the preceding claims,
**characterized in that**
adjusting means (4) are provided, and the adjusting device (1) is prepared such that, for the purpose of adjusting the yaw position, respectively two adjusting means (4) are fixed with their gripping portions (8) on the holed flange (2), while the other two are shifted with their gripping portions (8) from one hole position to another.

6. Adjusting device (1) according to any one of the preceding claims,
**characterized in that**
the adjusting device (1) is prepared such that the linear drive (10), or at least one of the linear drives (10), is operated, at least upon attaining a new yaw position, such that it builds up a tension, in order thereby to avoid a play, or a clearance, between the holed flange (2) and the anchorage point (326).

7. Adjusting device (1) according to any one of the preceding claims,
**characterized in that**
for each adjusting means (4) there is a measuring means for effecting a longitudinal measurement of an adjusting cylinder of the adjusting means (4), for the purpose of positioning the gripping portion of the adjusting means, in order thereby to find a drilled hole of the holed flange, for the purpose of fixing the gripping portion, and/or in order to deduce a yaw position therefrom.

8. Adjusting device (1) according to any one of the preceding claims,
**characterized in that**
the individual drilled holes (6) of the holed flange (2) and/or their positions are identified, in order to determine therefrom the current yaw position of the nacelle (104).

9. Adjusting device (1) according to any one of the preceding claims,
**characterized in that**
there is an information connection for the purpose of transmitting information between the adjusting means (4), preferably via a central control unit, in order thereby to coordinate the movement of the adjusting means (4).

10. Adjusting device (1) according to any one of the preceding claims,
**characterized in that**
each gripping portion (8) has at least two fixing pins for engaging in two drilled holes (6)
and/oder
the gripping portion (8) grips around an outer perimeter of the holed flange (2) and/or is arranged so as to be displaceable along this outer perimeter, in particular a, or the, full-perimeter guide portion (430) of the holed flange (2) is arranged at the outer perimeter of the holed flange (2) and/or between the drilled holes (6) and the outer perimeter, and/or a yaw bearing, realized as a ball-bearing slewing ring, is used.

11. Wind turbine (100), comprising a tower (102) and a wind turbine nacelle (104) mounted in a rotatable manner on the tower (102) by means of a yaw bearing (322), wherein, for the purpose of adjusting a yaw position of the nacelle (104), an adjusting device (1) according to any one of the preceding claims is used.

12. Wind turbine (100) according to Claim 11,
**characterized in that**
the holed flange (2) is fastened to a tower shaft of the tower (102) and/or to the yaw bearing (322), and in particular extends radially outward from there, and/or the drilled holes of the holed flange (2) are arranged radially outwardly in relation to the tower (102) and/or in relation to the yaw bearing (322), and/or the yaw bearing is realized as a ball-bearing slewing ring.

13. Adjusting means (4) prepared for use in an adjusting device (1) according to any one of Claims 1 to 10.

14. Method for adjusting a yaw position of a nacelle (104) of a wind turbine (100) by means of an adjusting device (1) according to any one of Claims 1 to 10 and/or an adjusting means (4) according to Claim 13, comprising the steps
a) actuating a, or at least one, first adjusting means (4) that is engagement with the holed flange (2), such that there results a rotational movement between the holed flange (2) and the anchorage point (326), and consequently a yaw adjustment of the nacelle (104),
b) shifting at least one further adjusting means (4), respectively, from one drilled hole (6) into another drilled hole (6) of the holed flange (2),
c) actuating the at least one further adjusting means (4) that is now in engagement with the holed flange (2), such that there results a further movement, or rotational movement, between the holed flange (2) and the anchorage point (326), and consequently a further yaw adjustment of the nacelle (104),
d) shifting the at least one first adjusting means (4), respectively, from one drilled hole (6) into another drilled hole (6) of the holed flange (2), and
e) repeating the steps a) to d), until the nacelle (104) has attained its desired yaw position, or,
f) as an alternative to the steps b) and c), fixing the holed flange (2) in position by at least one other fixing device, and,
g) as an alternative to step e), repeating the steps a), f) and d), until the nacelle (104) has attained its desired yaw position.

15. Method according to Claim 14,
**characterized in that**
the linear drive (10), or at least one of the linear drives (10), is operated, at least upon attaining a new, desired yaw position, such that it builds up a tension, in order thereby to avoid a play, or a clearance, between the holed flange (2) and the anchorage point (326).

## Revendications

1. Dispositif de réglage (1) pour le réglage d'une position d'azimut d'une nacelle (104) d'une éolienne (100) comprenant
un flasque perforé (2) circonférentiel, doté de perçages, et
au moins un moyen de réglage (4) avec
- une section de préhension (8) pour la prise avec le flasque perforé (2),
- une section de fixation (12) pour la fixation à un point d'ancrage (326) de l'éolienne (100) et
- un entraînement linéaire (10), pour la réalisation d'un mouvement linéaire entre la section de préhension (8) et la section de fixation (12), dans lequel
le flasque perforé (2) est relié solidement à la nacelle (104) et le point d'ancrage (326) est relié solidement à une partie fixe de l'éolienne (100), ou inversement, et la nacelle (104) est logée de manière rotative par rapport à cette partie fixe de l'éolienne (100), si bien que le flasque perforé (2) et le point d'ancrage (326) peuvent également réaliser un mouvement de rotation l'un par rapport à l'autre, si bien qu'un mouvement linéaire réalisé par l'entraînement linéaire (10) entre la section de préhension (8) et la section de fixation (12) entraîne un mouvement de rotation entre le flasque perforé (2) et le point d'ancrage (326) et entraîne ainsi un réglage de l'azimut de la nacelle (104), **caractérisé en ce que**
la section de préhension (8) présente au moins une broche de fixation mobile pour venir en prise avec respectivement un des perçages (6) du flasque perforé (2) afin de fixer ainsi de manière amovible la section de préhension (8) au niveau du flasque perforé (2).

2. Dispositif de réglage (1) selon la revendication 1,
**caractérisé en ce que**
l'au moins un entraînement linéaire (10) est réalisé en tant qu'entraînement linéaire hydraulique, dans lequel de préférence l'entraînement linéaire hydraulique (10) est commandé par le biais de soupapes de commande, par le biais desquelles un liquide hydraulique est amené à un vérin hydraulique ou en est évacué, afin d'entraîner ainsi le mouvement linéaire entre la section de préhension (8) et la section de fixation (12), dans lequel une fermeture des soupapes de commande empêche le mouvement linéaire et la nacelle (104) est ainsi maintenue dans sa position d'azimut actuelle, et/ou que l'entraînement linéaire (10) est réalisé de manière autobloquante et l'empêchement du mouvement linéaire se fait par l'autoblocage.

3. Dispositif de réglage (1) selon la revendication 1 ou 2,
**caractérisé en ce que**
le flasque perforé (2) présente une section de guidage circonférentielle (430), en particulier un rail circonférentiel, une rainure circonférentielle (430) et/ou une saillie circonférentielle, et
la section de préhension (8) présente une section de course adaptée à la section de guidage circonférentielle (430) du flasque perforé (2) afin de guider la section de préhension (8) avec cette section de course au niveau de la section de guidage circonférentielle (430), et/ou que
les perçages (8) du flasque perforé (2) sont revêtus de douilles trempées afin de réduire en particulier une usure des perçages (8).

4. Dispositif de réglage (1) selon l'une quelconque des revendications précédentes,
**caractérisé en ce que**
l'entraînement linéaire (10) est doté d'un système d'amortissement, en particulier qu'un ou l'entraînement linéaire hydraulique (10) présente une ouverture bypass afin de créer une possibilité d'échappement pour le liquide hydraulique pour parvenir à l'amortissement.

5. Dispositif de réglage (1) selon l'une quelconque des revendications précédentes,
**caractérisé en ce que**
des moyens de réglage (4) sont prévus et le dispositif de réglage (1) est préparé de sorte que, pour le réglage de la position d'azimut, respectivement 2 moyens de réglage (4) soient fixés avec leurs sections de préhension (8) au niveau du flasque perforé (2), pendant que les deux autres sont déplacés avec leurs sections de préhension (8) d'une position de trou à une autre.

6. Dispositif de réglage (1) selon l'une quelconque des revendications précédentes,
**caractérisé en ce que**
le dispositif de réglage (1) est préparé pour que l'entraînement linéaire (10) ou au moins un des entraînements linéaires (10), au moins lors de l'atteinte d'une nouvelle position d'azimut, fonctionne de telle sorte qu'il établit une tension afin d'éviter ainsi un jeu ou un mou entre le flasque perforé (2) et le point d'ancrage (326).

7. Dispositif de réglage (1) selon l'une quelconque des revendications précédentes,
**caractérisé en ce que**
il y a un moyen de mesure pour chaque moyen de réglage (4), pour procéder à une mesure de longueur d'un vérin de réglage du moyen de réglage (4), pour positionner la section de préhension du moyen de réglage, afin de trouver ainsi un perçage du flasque perforé pour fixer la section de préhension et/ou afin d'en déduire une position d'azimut.

8. Dispositif de réglage (1) selon l'une quelconque des revendications précédentes,
**caractérisé en ce que**
les perçages individuels (6) du flasque perforé (2) et/ou leurs positions sont identifiés afin d'en déterminer la position d'azimut actuelle de la nacelle (104).

9. Dispositif de réglage (1) selon l'une quelconque des revendications précédentes,
**caractérisé en ce que**
une liaison d'information pour la transmission d'informations entre les moyens de réglage (4), de préférence par le biais d'une unité de commande centrale, existe afin de coordonner ainsi le mouvement des moyens de réglage (4).

10. Dispositif de réglage (1) selon l'une quelconque des revendications précédentes,
**caractérisé en ce que**
chaque section de préhension (8) présente au moins deux broches de fixation pour la mise en prise avec deux perçages (6),
et/ou
la section de préhension (8) enserre une circonférence extérieure du flasque perforé (2) et/ou est agencée de manière coulissante le long de cette circonférence extérieure, en particulier qu'une ou la section de guidage circonférentielle (430) du flasque perforé (2) est agencée au niveau de la circonférence extérieure du flasque perforé (2) et/ou entre les perçages (6) et la circonférence extérieure et/ou qu'un palier d'azimut est utilisé, qui est réalisé en tant que palier à rotule.

11. Éolienne (100) comprenant une tour (102) et une nacelle d'éolienne (104) logée de manière rotative sur la tour (102) par le biais d'un palier d'azimut (322), dans laquelle un dispositif de réglage (1) selon l'une quelconque des revendications précédentes est utilisé pour le réglage d'une position d'azimut de la nacelle (104).

12. Éolienne (100) selon la revendication 11,
**caractérisée en ce que**
le flasque perforé (2) est fixé à un arbre de tour de la tour (102) et/ou au palier d'azimut (322) et s'étend en particulier de là radialement vers l'extérieur et/ou les perçages du flasque perforé (2) sont agencés radialement vers l'extérieur par rapport à la tour (102) et/ou par rapport au palier d'azimut (322) et/ou que le palier d'azimut est réalisé en tant que palier à rotule.

13. Moyen de réglage (4) préparé pour l'utilisation dans un dispositif de réglage (1) selon l'une quelconque des revendications 1 à 10.

14. Procédé de réglage d'une position d'azimut d'une nacelle (104) d'une éolienne (100) avec un dispositif de réglage (1) selon l'une quelconque des revendications 1 à 10 et/ou un moyen de réglage (4) selon la revendication 13 comprenant les étapes
a) d'actionnement du ou d'au moins un premier moyen de réglage (4) en prise avec le flasque perforé (2), si bien qu'un mouvement de rotation entre le flasque perforé (2) et le point d'ancrage (326) et ainsi un réglage de l'azimut de la nacelle (104) en résulte,
b) de changement de position d'au moins un autre moyen de réglage (4) respectivement d'un perçage (6) à un autre perçage (6) du flasque perforé (2),
c) d'actionnement de l'au moins un autre moyen de réglage (4) en prise maintenant avec le flasque perforé (2), si bien qu'un autre mouvement ou mouvement de rotation entre le flasque perforé (2) et le point d'ancrage (326) et ainsi un autre réglage de l'azimut de la nacelle (104) en résulte,
d) de changement de position de l'au moins un premier moyen de réglage (4) respectivement d'un perçage (6) à un autre perçage (6) du flasque perforé (2) et
e) de répétition des étapes a) à d), jusqu'à ce que la nacelle (104) ait atteint sa position d'azimut souhaitée, ou
f) en variante aux étapes b) et c) ; de fixation du flasque perforé (2) par au moins un autre dispositif de fixation, et
g) en variante à l'étape e), de répétition des étapes a), f) et d), jusqu'à ce que la nacelle (104) ait atteint sa position d'azimut souhaitée.

15. Procédé selon la revendication 14,
**caractérisé en ce que**
l'entraînement linéaire (10) ou au moins un des entraînements linéaires (10), au moins lors de l'atteinte d'une nouvelle position d'azimut souhaitée, fonctionne de telle sorte qu'il établit une tension afin d'éviter ainsi un jeu ou un mou entre le flasque perforé (2) et le point d'ancrage (326).
